**Europäisches Patentamt**

**European Patent Office**

**Office européen des brevets**

(19)

(11) Veröffentlichungsnummer: **0 117 864**
**A1**

# (12) EUROPÄISCHE PATENTANMELDUNG

(21) Anmeldenummer: **84890022.1**

(22) Anmeldetag: **25.01.84**

(51) Int. Cl.³: **A 62 C 4/00**, F 02 B 29/04

(30) Priorität: **25.01.83 PC /AT83/000 04**

(43) Veröffentlichungstag der Anmeldung: **05.09.84**
**Patentblatt 84/36**

(84) Benannte Vertragsstaaten: **AT BE CH DE FR GB IT LI LU NL SE**

(71) Anmelder: **Jenbacher Werke AG, Achenseestrasse 1-3, A-6200 Jenbach/Tirol (AT)**

(72) Erfinder: **Söllner, Robert, Sieglstrasse 15, A-6200 Jenbach (AT)**
Erfinder: **Burgstaller, Günther, Am Rain 376, A-6135 Stans (AT)**

(74) Vertreter: **Hofinger, Engelbert et al, Torggler-Hofinger Wilhelm-Greil-Strasse 16, A-6020 Innsbruck (AT)**

(54) Verbrennungsmotor.

(57) Beschrieben wird ein Verbrennungsmotor (1) mit einem Turbolader (6) zur Vorverdichtung eines Gemisches aus der zur Verbrennung notwendigen Luft und einem gas- oder nebelförmigen Brennstoff, wobei zwischen dem Turbolader (6) und dem Verbrennungsmotor (1) ein Nachkühler (11) für das Gemisch vorgesehen ist. Der Nachkühler (11) für das Gemisch ist mit so engen Durchlässen (17) für das Gemisch versehen, dass er als Flammschutzeinrichtung wirkt.

EP 0 117 864 A1

Verbrennungsmotor

Die Erfindung bezieht sich auf einen Verbrennungsmotor mit einer Einrichtung zur Vorverdichtung eines Gemisches aus der zur Verbrennung notwendigen Luft und einem gas- oder nebelförmigen Brennstoff, wobei zwischen der Einrichtung zur Vorverdichtung und dem Verbrennungsmotor ein Nachkühler für das Gemisch und eine die Ausbreitung von Explosionen verhindernde Flammschutzeinrichtung vorgesehen sind.

Derartige Verbrennungsmotoren sind beispielsweise in US-A-3,577,726 beschrieben.

Ein Nachkühler für das vorverdichtete Gemisch ist dabei vor allem dann wichtig, wenn dieses bereits in zündfähiger Form vorverdichtet wird. Erhitzt wird die Mischung nicht nur durch den Verdichtungsvorgang als solchen, sondern bei Verwendung eines Abgasturboladers zusätzlich noch durch die hohe Temperatur dieser im Turbinenbereich kirschrot glühenden Maschinenkomponente. Die Nachkühlung ist somit erforderlich, um zu verhindern, daß sich die Mischung entzündet, vor sie in den Motor gelangt. Eine Flammschutzeinrichtung soll hingegen verhindern, daß im Motorraum stattfindende Explosionen sich in den mit zündfähigem Gemisch gefüllten Leitungsbereich zwischen Turbolader und Motor ausbreiten. Hiezu ist im bekannten Fall einerseits ein Gitter vorgesehen, dessen große Oberfläche die Explosionshitze verteilen soll, und andererseits ein Überdruckventil, welches verhindert, daß der Explosionsdruck den Nachkühler oder den Turbolader beschädigt.

Aufgabe der Erfindung ist es, eine wesentliche Vereinfachung gegenüber der bekannten Einrichtung zu erzielen, ohne deren Funktionsfähigkeit herabzusetzen. Dies wird erfindungsgemäß dadurch erreicht, daß der Nachkühler für das Gemisch mit so engen Durchlässen für das Gemisch versehen ist, daß er als Flammschutzeinrichtung wirkt.

In der Literatur besteht dahingehend Übereinstimmung, daß mechanische Flammschutzeinrichtungen dadurch wirken, daß sie die Energie, welche bei der Verbrennung frei wird, so weit reduzieren, daß die Restenergie nicht mehr zum Zünden des verbleibenden explosiven Gemisches ausreicht. Die ursprünglich bestehende Vermutung, daß der wesentliche Wirkmechanismus von Flammensperren die Wärmeabgabe an die Wand der Sperre sei, wird zwar noch durchaus vertreten (vgl. US-A-3,577,726, US-A-3,356,256), wird jedoch auch von maßgeblicher Seite bestritten (vgl. das Standardwerk "Explosion, Ablauf u. Schutzmaßnahmen" von W. Bartknecht, Springer-Verlag Berlin Heidelberg New York, 1978, S.160).

Insofern als Breite und Länge der Durchlässe für das entzündete Gas offensichtlich die wichtigsten Parameter für das Funktionieren einer Flammschutzeinrichtung sind, kann tatsächlich argumentiert werden, daß der Energieverlust, den das brennende Gas beim Durchtritt durch eine mechanische Flammensperre erfährt, primär auf die Expansion der aus der Flammensperre austretenden heißen Verbrennungsgase zurückzuführen sei. Auch wenn somit nicht eindeutig feststeht, in welchem Ausmaß Wärmeleitvorgänge an der Funktion mechanischer Flammensperren beteiligt sind, ist jedenfalls nicht zu bestreiten, daß die Fähigkeit der Flammensperre zur Wärmeableitung steigt, wenn deren Temperatur erniedrigt wird. Die erfindungsgemäße Einrichtung erreicht daher trotz einfacherer Bauweise nicht nur die gleiche Wirkung wie die bekannte Aggregation von Nachkühler und Flammschutzeinrichtung, sondern erzielt demgegenüber eine allerdings derzeit noch nicht quantifizierte Verbesserung.

Die Geometrie des erfindungsgemäßen Nachkühlers hängt primär von der Art der Gasmischung ab, welche dem Verbrennungsmotor zugeführt wird. Hat der Nachkühler die Form eines gekühlten Plattenstapels, so liegt die Spaltweite, bei welcher ein Zünddurchschlag gerade noch vermieden wird, bei hinreichend langem Spalt bei etwa 1,2 mm für Methan und etwa 0,4 mm für Wasserstoff. Solche Plattenabstände sind bei einem Nachkühler ohne weiteres zu erreichen, ohne diesen allzu voluminös oder kostspielig zu machen.

Einzelheiten der Erfindung werden anschließend anhand der Zeichnung erläutert. In dieser zeigt

Fig. 1 eine Einrichtung nach dem Stande der Technik,
Fig. 2 ein Ausführungsbeispiel der Erfindung, wobei
Fig. 3 einen Schnitt durch den Nachkühler entlang der Linie III-III,
Fig. 4 einen Schnitt entlang der Linie IV-IV wiedergibt. In
Fig. 5 sind für verschiedene Gase Spaltweiten und -längen angegeben, bei denen eine Explosion gerade noch gestoppt wird.

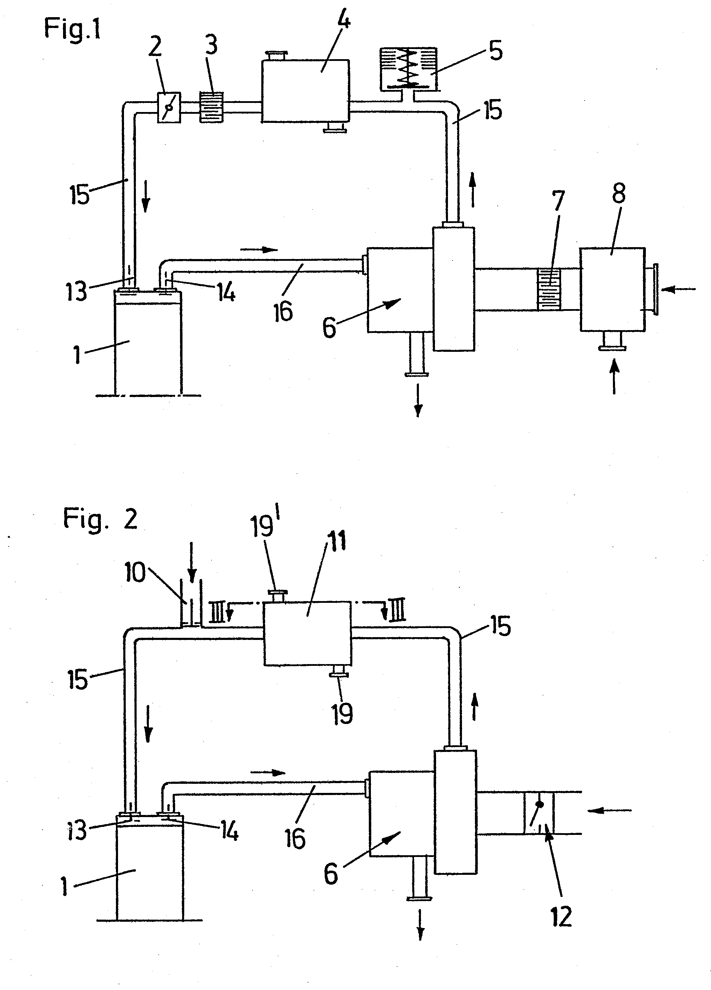

Dem in Fig. 1 schematisch angedeuteten Verbrennungsmotor 1 wird ein optimales Gemisch von Brenngas und Luft über eine Zuleitung 15 in noch zu besprechender Weise über das Einlaßventil 13 zugeführt. Die Abgase gelangen aus dem Verbrennungsmotor über das Ventil 14 und die Abgasleitung 16 über den Turbolader 6 ins Freie, wobei sie die Turbine des Turboladers antreiben.

Die Zufuhr des Gemisches aus Brenngas und Luft erfolgt in der Weise, daß zunächst die beiden Komponenten des Gemisches in einem Mischbehälter 8 zusammengeführt werden und durch einen Teilefänger 7 in das Verdichtergehäuse des Turboladers 6 gelangen, wo sie durch das mit hoher Drehzahl umlaufende Verdichterrad innig vermischt und unter Druck in die Zuleitung 15 des Motors gepreßt werden.

Die Menge des dem Verbrennungsmotor 1 zugeführten Gasgemisches kann über eine einfache Drosselklappe geregelt werden. Verringert man die Füllung des Verbrennungsmotors 1 durch Verstellen der Drosselklappe 2, so sinkt automatisch die Leistung des Turboladers 6 und der Nachschub an Gemisch verändert sich entsprechend der gewählten Drosselstellung. Um eine vorzeitige Entzündung des brennbaren Gemisches zu verhindern, ist in der Zuleitung 15 ein Nachkühler 4 vorgesehen, der von Kühlwasser durchflossen ist. Ein Rückschlagen von Flammen aus dem Verbrennungsraum des Verbrennungsmotors 1 wird durch ein gesondertes Flammschutzsieb 3 verhindert. Sollte es trotz aller Vorsichtsmaßnahmen in der Zuleitung 15 zu einer ungewollten Verbrennung kommen, verhindert das Überdruckventil 5 das Entstehen eines Schadens, wobei zudem ein Flammschutzsieb im Überdruckventil 5 das Nachaußendringen von Flammen unterbindet.

Die Ausführung gemäß Fig. 2 unterscheidet sich von der ersten Ausführung vor allem insofern, als das Flammschutzsieb hier in den Nachkühler in der Weise integriert ist, daß das Gemisch durch Zwischenräume geleitet wird, die so eng sind, daß eine Flamme nicht durchschlägt. Auf ein Überdruckventil kann bei dieser Ausführung vor allem dann verzichtet werden, wenn das durch den Nachkühler 11 geleitete Gemisch erst durch einen Zusatzbrennstoff, der über das Ventil 10 zugeführt wird, auf ein optimales Mischungsverhältnis gebracht wird. Die vorgesehene Rückschlagsicherung 12 dient dazu, den Turbolader 6 von der Zufuhrleitung für das vorgemischte Gas zu trennen.

Das Wesen der in Fig. 2 illustrierten Erfindung liegt darin, die bei der Ausführung nach dem Stande der Technik getrennten Elemente Flammschutzeinrichtung 3 und Nachkühler 4 zu vereinigen. Dabei kann der entsprechend ausgebildete Nachkühler 11 durchaus in bekannter Weise aus Platten 18 aufgebaut sein, durch welche mittels Sammelleitungen 19,19' ein Kühlmittel geleitet wird. Zwischen den einzelnen Platten bestehen Spalte der Weite X und der Länge Y, die so bemessen sind, daß die Entzündung des Gemisches durch den Nachkühler 11 auf jene Seite beschränkt wird, auf welcher sie entstanden ist.

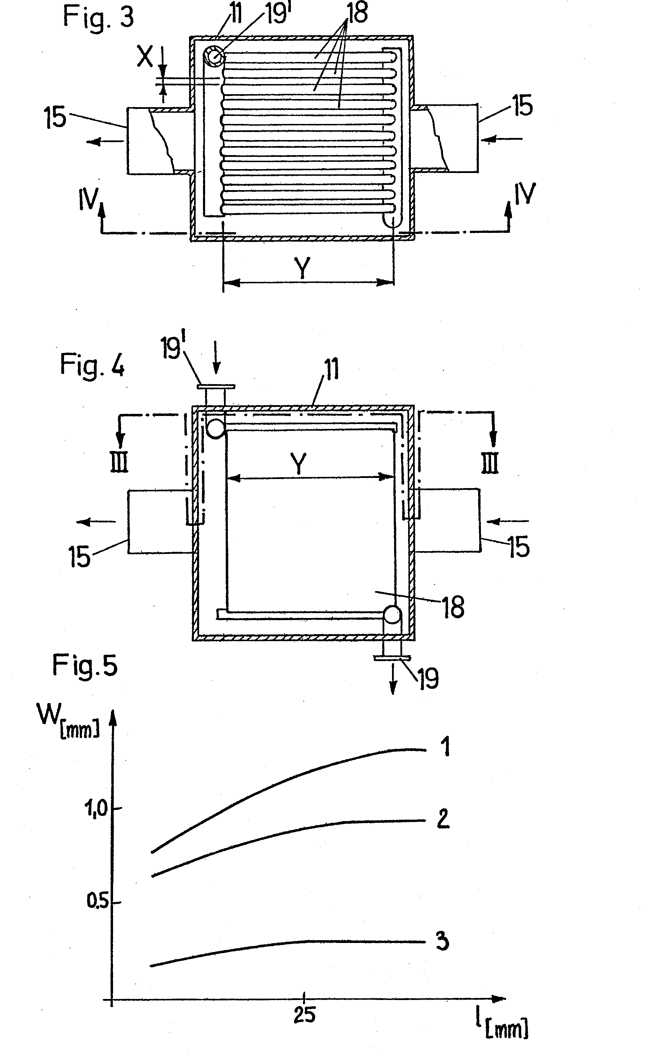

Die Regeln für die Bemessung derartiger mechanischer Flammensperren sind an sich bekannt und beispielsweise im eingangs zitierten Werk von Bartknecht dargestellt. Dort ist auch der Zusammenhang zwischen Höchstspaltweite w und Mindestspaltlänge l wiedergegeben, die gemäß Fig. 5 erforderlich sind, um die Ausbreitung eines Explosion zu verhindern. Die Kurve 1 bezieht sich dabei auf Methan, die Kurve 2 auf Propan, die Kurve 3 auf Wasserstoff. Wie man sieht, ist durch eine Vergrößerung der Spaltlänge über einen Wert von 2,5 cm hinaus kaum mehr etwas zu gewinnen, sodaß der Wert Y in Fig. 3 und 4 im allgemeinen durch das Bedürfnis nach hinreichender Nachkühlung des Gemisches bestimmt sein wird. Wesentlich für die erfindungsgemäße Funktion des Nachkühlers 11 ist somit die hinreichend geringe Spaltweite X, die im Falle eines Propan-Methan-Gemisches etwa 0,8 mm betragen kann.

Patentansprüche:

1. Verbrennungsmotor mit einer Einrichtung zur Vorverdichtung eines Gemisches aus der zur Verbrennung notwendigen Luft und einem gas- oder nebelförmigen Brennstoff, wobei zwischen der Einrichtung zur Vorverdichtung und dem Verbrennungsmotor ein Nachkühler für das Gemisch und eine die Ausbreitung von Explosionen verhindernde Flammschutzeinrichtung vorgesehen sind, dadurch gekennzeichnet, daß der Nachkühler (11) für das Gemisch mit so engen Durchlässen (17) für das Gemisch versehen ist, daß er als Flammschutzeinrichtung wirkt.

2. Verbrennungsmotor nach Anspruch 1, dadurch gekennzeichnet, daß der Nachkühler (11) mit aus einem Stapel von kühlmitteldurchflossenen Platten (18) besteht, zwischen denen die Durchlässe (17) für das Gemisch vorgesehen sind, deren kleinste Abmessung $(x)$ unter 1,5 mm und deren Länge $(y)$ mindestens 25 mm beträgt.

3. Verbrennungsmotor nach Anspruch 2, dadurch gekennzeichnet, daß die kleinste Abmessung $(x)$ der Durchlässe (17) etwa 0,8 mm beträgt, wenn als Brennstoff eine Propan-Methanmischung dient.

Fig.1

Fig. 2

0117864

1/2

Fig. 3

Fig. 4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y,D | US-A-3 577 726 (WAGNER)<br>* Insgesamt *<br><br>--- | 1 | A 62 C 4/00<br>F 02 B 29/04 |
| Y | EP-A-0 002 732 (HOECHST)<br>* Seite 2, Zeilen 29-38; Seite 3, Zeile 29 - Seite 4, Zeile 16; Figuren 1,2 *<br><br>--- | 1 | |
| A | EP-A-0 002 614 (ATLANTIC RICHFIELD)<br>* Seite 2, Zeilen 19-32; Seite 5, Zeilen 19-23; Seite 8, Zeilen 11-34; Seite 9, Zeile 34 - Seite 10, Zeile 21; Seite 11, Zeile 27 - Seite 13, Zeile 17; Figuren 2,3 *<br><br>--- | 1 | |
| A | DE-C- 172 144 (DEUTSCHE OXHYDRIC)<br><br>--- | | **RECHERCHIERTE SACHGEBIETE (Int. Cl. ³)** |
| A | GB-A- 363 628 (STEPHENSON)<br><br>----- | | F 02 B<br>A 62 C<br>F 23 D |

Der vorliegende Recherchenbericht wurde für alle Patentansprüche erstellt.

| Recherchenort<br>DEN HAAG | Abschlußdatum der Recherche<br>04-05-1984 | Prüfer<br>IVERUS D. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82